# EUROPEAN PATENT SPECIFICATION

(11) **EP 2 815 404 B1**
(45) Date of publication and mention of the grant of the patent: **30.08.2017**
(21) Application number: 13746701.5
(22) Date of filing: 06.02.2013
(51) Int. Cl.: G21C 1/22, G21C 1/03, G21C 1/32, G21C 5/02, G21C 17/00, G21C 3/54, G21C 5/12

(54) **INTEGRAL MOLTEN SALT REACTOR**
INTEGRIERTER SALZSCHMELZEREAKTOR
RÉACTEUR INTÉGRÉ À SELS FONDUS

(30) Priority: 06.02.2012 US 201261633071 P
(43) Date of publication of application: 24.12.2014
(73) Proprietor: Terrestrial Energy Inc., Mississauga, ON L4W 5K4 (CA)
(72) Inventor: LEBLANC, David, Ottawa, Ontario K1K 4T6 (CA)
(74) Representative: Cohausz & Florack
(86) International application number: PCT/CA2013/050090
(87) International publication number: WO 2013/116942

(56) References cited:
- EP-A1- 1 622 168
- WO-A1-2009/135286
- WO-A1-2010/129836
- DE-A1- 1 589 751
- JP-A- 2002 228 794
- US-A- 4 045 286
- US-A- 4 045 286
- US-A1- 2010 296 620
- US-B1- 6 259 760

## Description

### FIELD

The present disclosure relates generally to nuclear reactors (see e.g. DE1589751 and US6259760). More particularly, the present disclosure relates to molten salt nuclear reactors.

### BACKGROUND

Molten salt reactors (MSRs) were primarily developed from the 1950s to 1970s but, as of late, there has been increasing world interest in this type of reactor. Older concepts are being re-evaluated and new ideas put forth. This class of nuclear reactor has a great deal of advantages over current nuclear reactors, the advantages including potentially lower capital costs, overall safety, long lived waste profile and resource sustainability.

With MSRs advantages also come some significant technological challenges which lead to difficult basic design decisions. The first and likely foremost is whether and how a neutron moderator may be employed. Graphite has, in almost all cases, been chosen as a moderator as it behaves very well in contact with the fluoride salts used in MSRs. These salts are eutectic mixtures of fissile and fertile fluorides (UF4,ThF4,PuF3 etc) with other carrier salts such as LiF, BeF2 or NaF. Using graphite as a bulk moderator within the core of the MSR has many advantages. For example, it gives a softer or more thermalized neutron spectrum which provides improved reactor control and a greatly lowered starting fissile inventory. As well, using graphite throughout the core of a MSR allows the ability to employ what is known as an under-moderated outer zone which acts as a net absorber of neutrons and helps shield the outer reactor vessel wall from damaging neutron exposure. The vessel, which contains the nuclear core, has typically been proposed as being made of a high nickel alloy such as Hastelloy N; however, other materials are possible.

The use of graphite within the core of the MSR (i.e., within the neutron flux of a MSR) can have a serious drawback however. That is, that graphite will first shrink and then expand beyond its original volume as it is exposed to a fast neutron flux. An upper limit of total fast neutron fluence can be calculated and operation of the MSR is such that this limit is not exceeded. This limit determines when the graphite would begin to expand beyond its original volume and potentially damage surrounding graphite elements or the reactor vessel itself. How long graphite can be used within the reactor core is thus directly related to the local power density and thus to the fast neutron flux it experiences. A low power density core may be able to use the same graphite for several decades. This is the case for many previous reactors employing graphite such as the British gas cooled Magnox and AGR reactors. They were extremely large and had a low power density for thermohydraulic reasons but, this permitted an extremely long graphite lifetime. However, MSRs would benefit from having a far higher power density and thus graphite lifetime can become an issue.

The scientists and engineers designing MSRs have long been faced with important design options. A first option is to simply design the reactor to be quite large and very low power density in order to get a full 30 year or more lifetime out of the graphite. Thus one can seal all the graphite within the vessel and the graphite can remain in the vessel for the design life of the nuclear plant. Examples of this choice can be found in the studies of Oak Ridge National Laboratories (ORNL) in the late 1970s and early 1980s. For example, ORNL TM 7207 proposes a 1000 MWe reactor which was termed the "30 Year Once Through" design which would have a large reactor vessel of approximately 10 meters in diameter and height in order to avoid the need for graphite replacement. Much of the later work by Dr. Kazuo Furukawa of Japan, on what are known as the FUJI series of reactor designs, also chose this route of large, low power nuclear cores. These very large cores have obvious economic disadvantages in terms of the sheer amount of material required to fabricate the core and reactor vessel, and in the excessive weight of the core. These challenges increase the cost and complexity of the surrounding reactor building as would be understood by those trained in the field. It should be added that a 30 year nuclear plant lifetime was quite acceptable in the 1970s but by today's standards would be thought short. 50 or 60 years is now desired and would mean a still larger core to allow this lifetime without graphite replacement.

A second option often proposed is to employ a much smaller, higher power density core but to plan for periodic replacement of the graphite. This approach was commonly assumed in the work at Oak Ridge National Laboratories (ORNL) in the design of the Molten Salt Breeder Reactor from about 1968 to 1976 before the program was cancelled. This 1000 MWe reactor design had an outer vessel of Hastelloy N that would contain hundreds of graphite elements fitting together and filling the vessel but with passage channels for the molten salt fuel to flow and exit the core to external heat exchangers. In this second option, the reactor has much smaller dimensions which are of approximately 6 meters in diameter and height. In this case the graphite, particularly in the center of the core with the highest fast neutron flux, only had an expected lifetime of 4 years. Thus the reactor had to be designed to be shut down and opened up every 4 years to replace a large fraction of the graphite elements. This may not sound overly difficult to those not trained in the field but with molten salts, the fission products, some of which are relatively volatile, are in the fuel salt and can also embed themselves onto a surface layer of graphite and, for example, the inner metal surfaces of the reactor vessel. Thus just opening the reactor vessel was known to be an operation that could be difficult to perform without allowing radioactive elements to spread into the surrounding containment zone. As well, the design of the reactor vessel itself is more complex when it needs to be periodically opened. These challenges are why the route of larger, lower power density cores were often chosen.

A third option is to try to omit the use of graphite altogether. This is possible and results in reactors typically with a much harder neutron spectrum. An example of this choice is the Molten Salt Fast Reactor (MSFR) proposed by a consortium of French and other European researchers starting around year 2005. It has very serious drawbacks however. For example it requires upwards of five times the starting fissile load and any accidental exposure of the salt to a moderator, such as water or even hydrogen content in concrete, could lead to criticality dangers.

Beyond the issue of graphite lifetime, there are also the somewhat related issues of the lifetime of the reactor vessel itself and of the primary heat exchangers.

The reactor vessel wall may also have a limited lifetime due to neutron fluence with both thermal and fast neutrons potentially causing problems. The most commonly proposed material being a high nickel alloy, such as Hastelloy N, with reasonably well understood behaviour and allowed limits of neutron fluence. As such, a great deal of effort goes into core design to limit the exposure of neutrons and/or lower the operating temperature of the vessel wall. As well, adding thickness to the wall may help as strength is lost with increased neutron exposure. This adds both weight and expense. It is thus a challenge to have a 30 to 60 year lifetime of the reactor vessel itself.

Another design challenge is the primary heat exchangers which transfer heat from the radioactive primary fuel salt to a secondary coolant salt. This coolant salt then typically transfers heat to a working media such as steam, helium, CO2 etc. In some cases these heat exchangers are outside or external the reactor vessel itself, which appears to be the case for all 1950s to 1980s ORNL designs. They also may be located within the reactor vessel itself which has its own set of advantages and challenges. One great advantage of internal heat exchangers is no radiation of significance need leave the reactor itself as only secondary coolant salt enters and leaves the vessel.

For both internal and external heat exchangers, the great challenge is in either servicing or replacing them. When a MSR is opened up, it can potentially lead to radioactivity being released into a containment zone or space. ORNL for example proposed common tube in shell heat exchangers external to the core, four heat exchanger units per 1000 MWe reactor. In the case of any tube leaks the operation was not to fix or plug tubes but to open the shell and remove the entire tube bundle and replace with a new bundle. Only after a cooling period would a decision be made on repair and reuse of the bundle or simple disposal.. Thus it is clear that primary heat exchanger service and/or replacement techniques are a great challenge in MSR design.

Further, when either graphite or heat exchangers are replaced, then the issue of their safe storage must be also addressed as they will become significantly radioactive during operation. This represents yet another challenge in MSR overall plant design.

It should be further highlighted that the related nuclear design field of Fluoride salt cooled, High temperature Reactors (known as FHRs) has very similar issues. In this work the reactor design can be very similar but instead of the fuel being in the fluoride salt, it is in solid form within the graphite moderator using the fuel form known as TRISO. In this case the limited graphite lifetime is also a function of the lifetime of the solid TRISO fuels; however, all other design issues and challenges are very similar to MSR design work. In FHRs, the primary coolant salt is not nearly as radioactive but does typically contain some radioactive elements such as tritium and a similar set of challenges are present when planning to use solid block TRISO fuels and periodically replace them. A subset of FHR design involves using a pebble fuel form which does ease fuel replacement without opening up the reactor vessel; however, this type of design has its own set of issues

Therefore, improvements in nuclear reactors are desirable.

### SUMMARY

The present disclosure relates to the integration of the primary functional elements of graphite moderator and reactor vessel and/or primary heat exchangers and/or control rods into a single replaceable unit having a higher and more economic power density while retaining the advantages of a sealed unit. Once the design life of such an Integral Molten Salt Reactor (IMSR) is reached, for example, in the range of 3 to 10 years it is disconnected, removed and replaced as a unit and this unit itself may also potentially function as the medium or long term storage of the radioactive graphite and/or heat exchangers and/or control rods and/or fuel salt itself. The functions of decay heat removal and volatile off gas storage may also be integrated in situ.

According to the present invention, there is provided a method of operating a nuclear power plant according to claim 1. The nuclear power plant comprises a molten salt reactor (MSR) to produce heat, a heat exchanger system, and an end use system, the heat exchanger system to receive heat produced by the MSR and to provide the received heat to the end use system. The method comprises steps of: operating the MSR, the MSR comprising a vessel, a graphite moderator core positioned in the vessel, and a molten salt circulating at least in the vessel, the heat exchanger system to receive heat from the molten salt; shutting down the MSR after a pre-determined duration of operation, to obtain a shut-down MSR; severing any operational connection between the shut-down MSR and any portion of the heat exchanger system located outside the vessel, to obtain a severed, shut-down MSR; sequestering the severed, shut-down MSR; and operationally connecting a replacement MSR to any portion of the heat exchanger system located outside the vessel of the replacement MSR.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached figures
Figure 1 shows a molten salt nuclear reactor in accordance with the present disclosure.
Figure 2 shows a top view of the molten salt nuclear reactor of Figure 1.
Figure 3 shows, in accordance with the present disclosure, inlet and outlet molten salt conduits arranged to be shutoff when radioactivity is detected in the molten salt conduits or when a pressure change is detected in the molten salt conduits.
Figure 4 shows another molten salt nuclear reactor in accordance with the present disclosure.
Figure 5 shows a top view of the molten salt nuclear reactor of Figure 4.
Figure 6 shows yet another molten salt nuclear reactor in accordance with the present disclosure.
Figure 7 shows a further molten salt nuclear reactor in accordance with the present disclosure.
Figure 8 shows an additional molten salt nuclear reactor in accordance with the present disclosure.
Figure 9 shows a flowchart of a method according to certain examples of the present disclosure.
Figure 10 shows a nuclear power plant according to certain examples of the present disclosure.

### DETAILED DESCRIPTION

The present disclosure provides an integral Molten Salt Reactor (IMSR). The IMSR of the present disclosure has a graphite core that is permanently integrated with the vessel of the IMSR, which means that the graphite core is in the vessel of IMSR for the lifetime of the IMSR. As such, in the IMSR of the present disclosure, the graphite core is not a replaceable graphite core and remains within the IMSR for the operational lifetime of the IMSR. The graphite core is fixedly secured within the vessel of the IMSR. Advantageously, this eliminates the need for any apparatus that would be required for replacing the graphite core at pre-determined moments as per a pre-determined schedule. A further advantage is that the IMSR does not require any access port to allow access to the graphite core for replacement of the graphite core. An additional advantage of the IMSR of the present disclosure is that, after expiration of the design lifetime of the IMSR, the IMSR serves as a storage container for any radioactive matter within the IMSR. The components of the IMSR include the reactor vessel itself and any graphite elements of the nuclear core. Other components can include the primary heat exchangers which can be installed, in the reactor vessel, during fabrication of the IMSR. The IMSR is built to operate (produce electricity) for a design lifetime, which takes into account the reactor's graphite core expansion over time and the structural integrity of the graphite core. That is, as mentioned above in the background section, the graphite core will eventually expand beyond its original volume under neutron flux. Operation of MSRs in the presence of such expansion is not desirable as the graphite core can suffer breaks. The IMSR of the present disclosure is simply shut down and replaced after expiration of its design lifetime. Further components of the IMSR can include piping such as coolant salt inlet conduits and outlet conduits, and the pump shaft and impeller for moving (pumping) the coolant salt (primary coolant fluid) when a pump is employed.

In some set-ups of the present disclosure, an IMSR that has been shut down can simply remain in its containment zone (hot cell) that can act as a heat sink for the decay heat generated by the shut down IMSR. The decay heat simply radiates out the IMSR through the IMSR's vessel wall and into the containment zone and ultimately to the outside environment. MSRs typically operate at temperatures in the region of 700 degrees C, radiant heat is very effective in removing decay heat. Further, to accelerate decay heat removal, the IMSR of the present disclosure, a buffer salt can be added in the containment zone to surround the IMSR; this allows faster heat extraction from the IMSR to the containment zone. In certain set-ups the IMSR can have a frozen plug of salt that can be melted to allow the primary coolant drain to decay heat removal tanks.

In some other set-up, during operation of the IMSR and after shut down of the IMSR, the IMSR can be a sealed unit that simply retains produced fission gases within the IMSR sealed vessel or, the fission gases can be release slowly to any suitable fission gases treatment system.

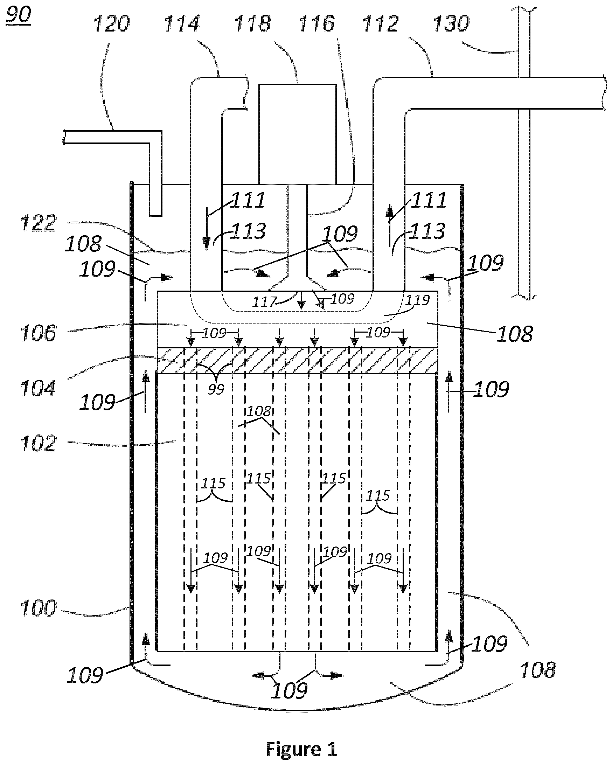

Figure 1 shows the frontal view of an IMSR 90 of the present disclosure. 100 is the reactor vessel itself, made of Hastelloy N, a high nickel alloy, or any other suitable material such the molybdenum alloy TZM (titanium-zirconium-molybdenum alloy). The reactor vessel 100 can be referred to as a sealed reactor vessel in the sense that any graphite core within the reactor vessel 100 is sealed therein; that is, it meant to remain within the reactor vessel 100, and not be replaced during the operational lifetime of the IMSR. As the IMSR 100 of the present disclosure can have a short design life of about 5 years, the walls of the reactor vessel 100 can be thinner than required for MSRs that have a 30+ year design life and can be allowed to operate in a much higher neutron fluence, or at a higher operating temperature than such long lifetime MSRs. 102 shows the core or core region which can be a simple mass of graphite defining channels 115 for a molten salt fuel 108 to flow through. The core 102 can also be referred to as core region, a graphite moderator core, and a graphite neutron moderator core. As the core 102 of the set-up of Figure 1 does not need to be replaced, the construction of the core 102 can be simplified in that it does require any structural features that would allow and/or facilitate its removal from the vessel 100 or its replacement. 104 shows a reflector (neutron reflector) to reflect neutrons toward the core 102 and to shield the primary heat exchanger unit 106 from excessive neutron flux. The reflector 104 can be optional. In the absence of the reflector 104 any metallic structure, for example, conduits and heat exchangers located in the IMSR above the core 102 would likely suffer neutron damage. The reflector 104 can be made of stainless steel as it serves no structural purpose so irradiation damage of the reflector 104 is of little concern. The reflector 104 has channels 99 or piping defined therein to allow the molten salt fuel 108 to flow from the primary heat exchanger unit 106 through the channels 115 defined by the core 102. The channels 115 can be varied in either diameter or lattice pitch in different areas of the core 102 to create. for example an undermoderated region as well as an outer reflector zone in the graphite, as would be understood by those trained in the field. In the IMSR example of Figure 1, the flow of the molten salt fuel 108 in the vessel 100 is shown by the arrows 109.

The primary heat exchanger unit 106 has an opening 117 that receives the fuel salt 109 provided by the drive shaft and impeller unit 116, which is driven by a pump 118. The primary heat exchanger unit 106 contains a series of heat exchangers. Such a heat exchanger is shown at reference numeral 119. Each heat exchanger 119 is connected to an inlet conduit 114 and an outlet conduit 112 that propagate a coolant salt 113 (which can also be referred to as a secondary coolant salt) from the outside of the vessel 100, through the heat exchanger 119, to the outside of the vessel 100. The coolant salt 113 flows through the inlet conduit 114, heat exchanger 119, and outlet conduit 112 in the direction depicted by arrows 111. The coolant salt 113 receives heat from heat exchanger 119, which receives the heat from the fuel salt 108 that flows on, or circulates around, the heat exchanger 119. The secondary coolant salt 113 is pumped by a pump or pumping system (not shown). For clarity purposes, the heat exchanger 119 is shown as a straight conduit connecting the inlet conduit 114 to the outlet conduit; however, as would be understood by the skilled worker, the heat exchanger 119 can be of any suitable shape and can include any number of conduits connecting the inlet conduit 114 to the outlet conduit 112.

The heat exchanger unit 106, the heat exchangers 119 it comprises, and the inlet conduits 114 and outlet conduits 112 connected to the heat exchangers 119 are all part of a heat exchanger system that is used to transfer heat from the IMSR to a system or apparatus such as, for example, a steam generator. Such a heat exchanger system is shown elsewhere in the disclosure, in relation to a nuclear power plant. The inlet conduits 114 and the outlet conduits 112 are operationally connected to a pump system - not shown - which is also part of the heat exchanger system. The pump system circulates the coolant salt through the inlet conduits 114, the outlet conduits 112, and the heat exchangers 119. The inlet conduits 114 and the outlet conduits 112 can be operationally connected to additional heat exchangers that provide the heat of the coolant salt circulating the heat exchangers 119, the inlet conduits 114 and the outlet conduits 112 to another medium, such as, for example, another fluid such as water.

In the example of Figure 1, the heat exchanger system is partly comprised in the vessel 100 as the heat exchangers 119 and a portion of inlet conduit 114 and the inlet conduit 112 are inside the vessel 100. Further, the heat exchanger system is partly outside the vessel 100 in that another portion of the inlet conduit 114 and the outlet conduit 112 are outside the vessel 100, as are the aforementioned pump system and any additional heat exchagers.

Also in the example of Figure 1, the molten fuel salt circulates only in the vessel 100. That is, under normal operating conditions, that is, conditions in which not break in equipment occurs, the molten fuel salt 108 does not leave the vessel 100.

The IMSR 90 is positioned in a hot cell whose function is to prevent radiation or radioactive elements, present or generated in the IMSR 90, from traversing the cell walls. Such a hot cell cell wall is shown at reference numeral 130. The outlet conduit 112, and the inlet conduit 114, can pass through opening in the hot cell wall 130 and can reach a secondary heat exchanger (not depicted) giving heat to either a third loop of working fluid or to the final working media such as steam or gas.

The level of molten fuel salt 108 within the reactor vessel is depicted by reference numeral 122. Fission gasses will collect above this liquid level 112 and may be retained in the vessel 100 or be allowed to transit, through an off gas line 120, to an off gas sequestration area (not depicted). These off gasses can be moved to the sequestration area by a helium entrainment system (not depicted).

An example of the dimensions of the IMSR of Figure 1 may be 3.5 meters in diameter, 7-9 meters in height, and may provide a total power of 400 MWₜₕₑᵣₘₐₗ (up to about 200MW_{electrical}). This power density would give a graphite lifetime and thus design lifetime of the IMSR of somewhere between 5 and 10 years. These dimensions of the IMSR 90 make transport and replacement of the IMSR 90 manageable and the power density allows many years of usage of any graphite employed. The geometry of the core 102 and vessel 100 can be cylindrical.

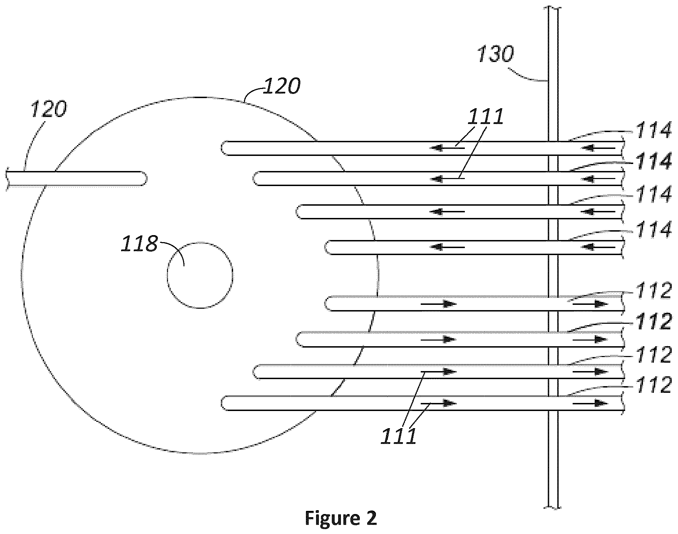

Figure 2 shows a top down view of the top of an example of an IMSR of the present disclosure. Figure 2 shows the pump motor 118, and the off gas line 120. As well, Figure 2 shows a series of four inlet conduits 114 and four outlet conduits 112 passing from the reactor vessel 100 through the primary hot cell wall 130. Four separate pairs of lines (one pair of lines has one inlet conduit 114 and one outlet conduit 112) are depicted; however, any suitable number of such pairs of lines (and associated heat exchanger 119) is also within the scope of the present disclosure. Each pair of lines is connected to a heat exchanger comprised in the heat exchanger unit 106.

An advantage of keeping primary heat exchangers within the IMSR and simply replacing the IMSR after its design lifetime, is that techniques for heat exchanger repair, removal, and/or replacement need not be developed. However plans must be made for potential failure and leakage between the primary fuel salt and secondary coolant. By compartmentalising the primary heat exchanger unit 106 into multiple independent heat exchangers 119, any failure of the heat exchangers 119 and/or leakage of molten fuel salt 108 into the coolant 113 can be effectively managed.

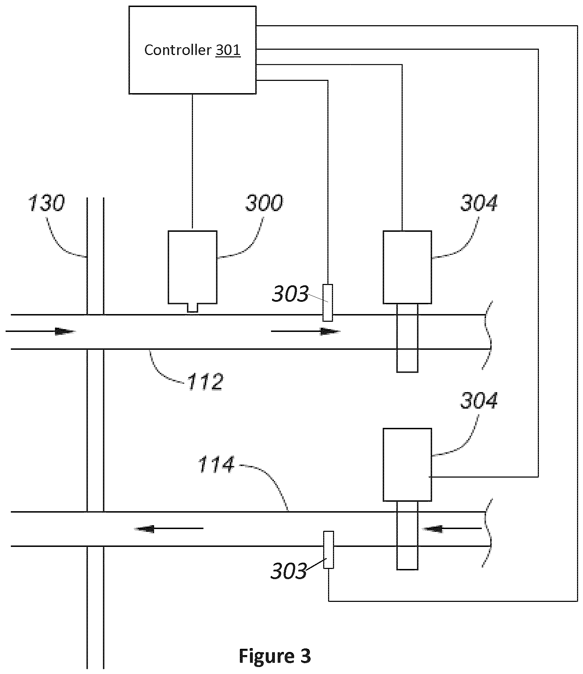

Figure 3 shows a set-up of a disconnect arrangement to cut off the flow of the secondary coolant 113 though the inlet conduits 114 and outlet conduits 112 in the direction given by arrows 111. For clarity purposes, only one pair of lines (one inlet conduit 114 and one outlet conduit 112) is shown in Figure 3. In the example of Figure 3, a radioactivity detector 300, for example, a Geiger counter is placed next to an outlet line 112 and can detect any leak of radioactive primary fuel salt into the outlet line 112. When radioactivity beyond a pre-determined level is detected by the radioactivity detector 300, a controller 301, connected to the radiation detector 301, controls shutoff mechanisms 304 that are connected to the outlet conduit 112 and the inlet conduit 114, to shut the outlet conduit 112 and its corresponding inlet conduit 114. The shutoff mechanisms are to isolate the individual heat exchanger 119 (not shown in Figure 2) connected to the now shut inlet conduit 114 and outlet conduit 112. The shutoff mechanisms 304 can also be to sever the physical connection along the inlet conduit 114 and the outlet conduit 112. The shutoff mechanisms can include any suitable type of shutoff valves and any suitable type of crimping devices, the latter to crimp shut the inlet conduit 114 and the inlet conduit 112. Further, if a leak of secondary coolant fluid 113 into the molten fuel salt 108 occurs, it can be detected by measuring a drop in pressure, using one or more pressure detectors 303 mounted in or otherwise operationally connected to the inlet conduit 114, the outlet conduit 112 or both. The one or more pressure detectors are operationally connected to the controller 301, which can shut off the shutoff mechanisms 304 upon determining that a drop in pressure (or any abnormal change in pressure) has occurred in the coolant salt 113 circulating in the inlet conduit 114, outlet conduit 112, or both.

By choosing compatible primary carrier salts for the molten fuel salt 108 and the secondary coolant salt 113, mixing of these fluids can be tolerated. For example, if the primary carrier salt is LiF-BeF2 and/or NaF-BeF2, then a secondary coolant salt of LiF-BeF2 and/or NaF-BeF2 would be compatible with the primary carrier salt in cases of limited mixing, i.e. in cases where the volume of coolant salt 113 leaked in into the molten fuel salt 108 is tolerable in terms of its effects on neutron production and absorption. By having many, perhaps 4 but even up to 10 or more pairs of inlet conduits/outlet conduits (and corresponding heat exchangers 119), the loss of one or more individual heat exchangers may do little to the overall ability to transfer heat from the primary heat exchanger unit 106 to the coolant salt 113 as the other remaining pairs of inlet conduits/outlet conduits can simply take the added heat exchange load or the IMSR can lower its power rating slightly. Heat exchangers are unlike many other systems in that there is very little economy of scale such that 10 smaller pairs of inlet/outlets or tube bundles will not have a combined cost much more than one large unit.

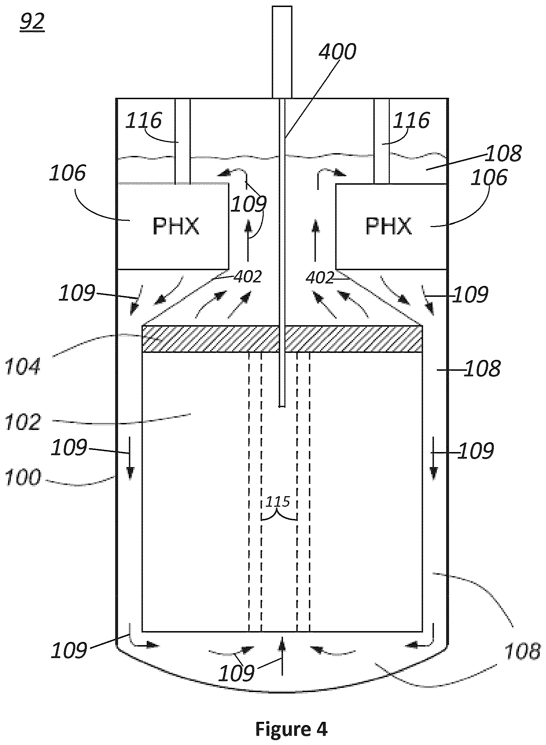

Figure 4 shows another IMSR 92 in accordance with the present disclosure. As in the IMSR 90 of Figure 1, the IMSR 92 of Figure 4 comprises a vessel 100, a reflector 104 and a core 102. Additionally, the IMSR 92 comprises a control rod 400 (which can be optional) and a series of heat exchanger units 106. Each heat exchanger unit has a drive shaft and impeller unit 116 to pump molten fuel salt 108 through the heat exchanger units 106. For clarity purposes, pump motors that drive the shaft and impeller units 116 are not shown. Also for clarity purposes, inlet conduits and outlets conduits propagating a coolant salt through the heat exchanger units 106 are not shown.

The molten salt fuel 108 that is pumped through the heat exchanger units 106 is directed downwards, towards the periphery of the core 102 by a baffle structure 402. The molten fuel salt flows towards the bottom of the vessel 100 and then upwards through the channels 115 of the core 102. Although two channels 115 are shown in Figure 4, any suitable number of channels 115 is within the scope of the present disclosure.

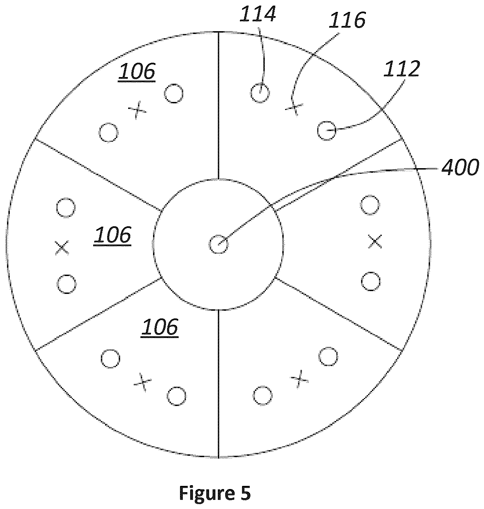

Figure 5 shows a top, cross-sectional view of the MSR 92 shown at Figure 4. The top view of Figure 5 shows 8 heat exchanger units 106, each having an inlet conduit 114, an outlet conduit 112, and a pump shaft and impeller unit 116. Also shown is the control rod 400.

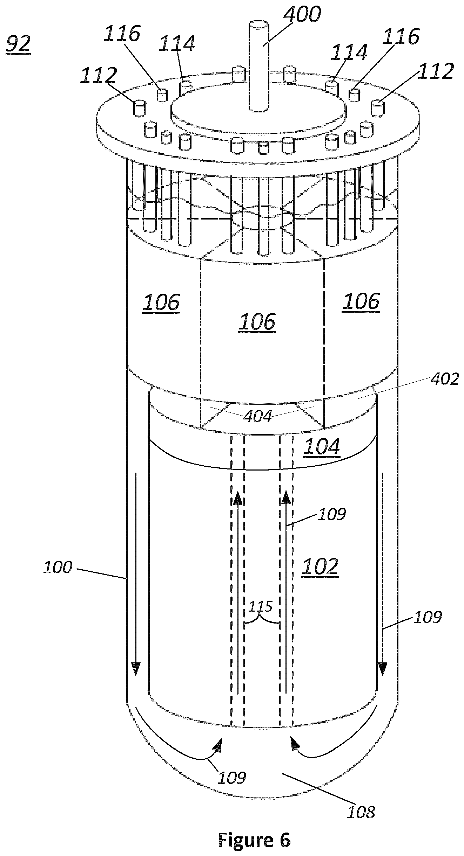

Figure 6 shows a side perspective view of the IMSR of Figure 4. The IMSR 92 comprises six heat exchanger units 106, each having an inlet conduit 114, outlet conduit 112, and shaft and impeller unit 116. The heat exchanger units 106 are positioned above the core 102 and about a longitudinal axis of the vessel, the longitudinal axis being parallel to the control rod 400. The direction of flow of the molten fuel salt 108 is indicated by arrow 109. After exiting the individual heat exchangers 106, the molten fuel 108 flows obliquely down, guided by the baffle structure 402 and, optionally, by partitions 404 that separate the outputs of the individual heat exchanger units.

The flow of the molten fuel salt 108 through the core 102 may be in different directions in different set-ups, for example upwards as shown in Figure 1 or downwards as shown in Figure 4. There are advantages and disadvantages to both upwards and downwards flow directions. An upward flow through the core as shown in Figure 4 has the advantage of being in the same direction as natural circulation but can make the use of pumps (the pumps pumping the coolant salt through the heat exchanger units) slightly more difficult to direct the flow through the primary heat exchangers.

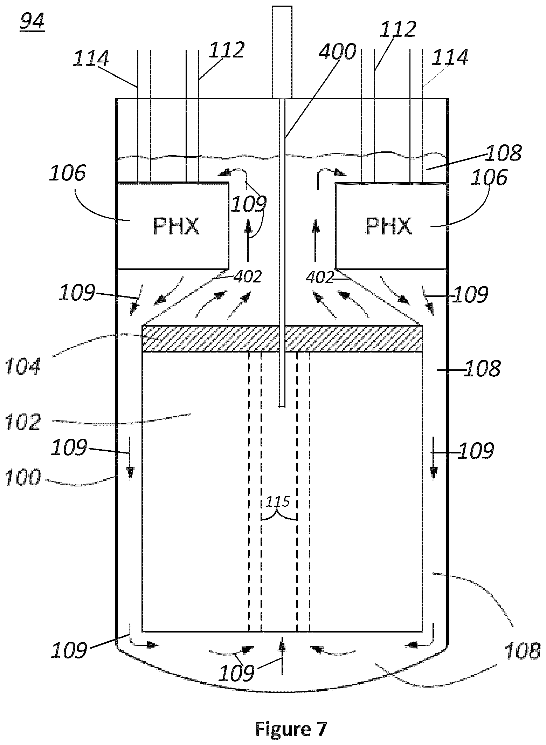

In some set-ups of the present disclosure, the pumps and the shaft and impeller units can be omitted and the MSR can instead use natural circulation to circulate the molten fuel salt 108. As such, the pumps and the shaft and impeller units can be optional where natural circulation suffices to circulate the molten salt fuel 108. Figure 7 shows a set-up where natural circulation of the molten fuel salt 108 is used. The MSR 94 of Figure 7 is similar to the MSR 92 of Figure 6 with the exception that no pumps or shaft an impeller units are required. Rather, the molten fuel salt 108 present in the channels 115 heats up through nuclear fission reaction and flows upwards towards the top region of the vessel 100. Once outside the channels 115, the molten salt cools down and begins to flow downwards, through the heat exchangers 105, and towards the bottom of the vessel 100 where the cooled molten fuel salt re-enters the channels to be heated up.

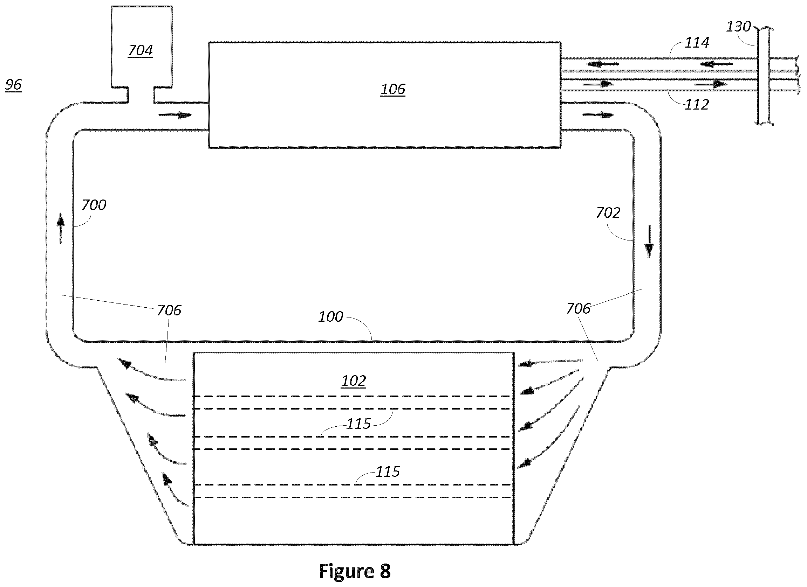

Figure 8 shows another IMSR in accordance with the present disclosure. The IMSR 96 of Figure 8 has a vessel 100 in which is positioned a graphite moderator core 102, which can have one or more channels 115 defined therein. The vessel 100 is connected to a heat exchanger unit 106 that is located outside the vessel 100. The heat exchanger unit 106 contains a plurality of heat exchangers (not shown); each heat exchanger includes an inlet conduit 114 and an outlet conduit 112 that circulate coolant salt though the heat exchanger. Each inlet conduit 114 and outlet conduit 112 is operationally connected to a coolant salt pump system (not shown). The inlet conduit 114 and the outlet conduit 112 are shown traversing a hot cell wall 130.The vessel 100 is connected to the heat exchanger unit 106 through conduits 700 and 702. A pump 704 circulates a molten fuel salt 706 through the vessel 100, the channels 115, and the heat exchanger 106. The same configuration of radioactivity detector, pressure detectors 303, shut-off mechanisms, and controller shown at Figure 3, can also be applied to the set-up of Figure 8.

Upon the graphite moderator core 102 reaching its operational lifetime, the conduits 700 and 702 can be severed to physically disconnect the vessel 100 from the remainder of the IMSR. After sealing the cut-off portion of the conduits 700 and 702 attached to the vessel 100, the vessel 100 can be disposed in a containment facility and a new vessel with a new graphite moderator core can be attached to the conduits 700 and 702.

The IMSR set-ups shown at Figures 1-8 were described has having a molten fuel salt (108 or 706) circulating therein. However, modifications to the set-ups of Figures 1-8 would allow the IMSRs shown therein to operate on a solid nuclear fuel comprised within the core 102 as opposed to being comprised in the molten fuel salt. For example, in the set-up of Figure 1, the molten fuel salt can be replaced by a fuel-free (nuclear fuel-free) molten salt and the core 102 can comprise solid nuclear fuel such as TRISO fuels. Further, as no fission gasses will be released in such solid fuel IMSRs, there would be no need for the off gas line 120. As previously described however, there are similar advantages to the invention of integrating a sealed solid fuel core into the replaceable IMSR unit.

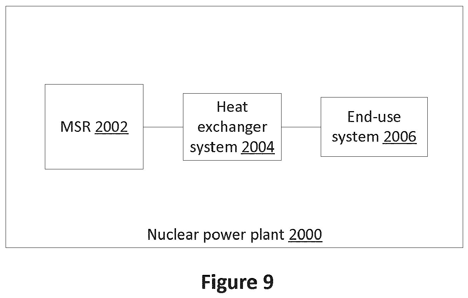

Figure 9 shows an example of a nuclear power plant 2000 that includes an MSR 2002 such as, any one of IMSR 90, 92, 94, and 96 described above in relation to Figures 1, 4, 6, 7, and 8. The MSR 2002 generates heat and provides the generated heat to a heat exchanger system 2004. The heat exchanger system 2004 can include the heat exchanger unit 106 disposed in the vessel 100, which also includes a graphite moderator core 102 and is discussed above in relation Figures 1, 4, 6, and 7. With respect to MSR 96 shown at Figure 8, the heat exchanger system 2004 can include the heat exchanger unit 106, which is located outside the vessel 100 that includes the graphite moderator core 102. Additionally, the heat exchanger system 2004 of Figure 9 can include additional heat exchangers that receive the heat from the above noted heat exchanger units 106. The nuclear power plant 2000 of Figure 9 includes an end-use system 2006 that receives heat from the heat exchanger system 2004 and uses that heat to do work. For example, the end-use system 2006 can include a heat exchanger apparatus that transport the heat received from the heat exchanger system 2004 to an industrial apparatus that uses that heat. An example of such an industrial apparatus includes a cement kiln. In other set-ups, the end-use system 2006 can include a steam generator that uses the heat received from the heat exchanger system 2004 to produce steam that powers a turbine system, which can be used to power an electrical generator. In further set-ups, the end-use system 2006 can include a steam generator that uses the heat received from the heat exchanger system 2004 to produce steam that is used for bitumen extraction from bituminous sands (e.g., steam assisted gravity drainage).

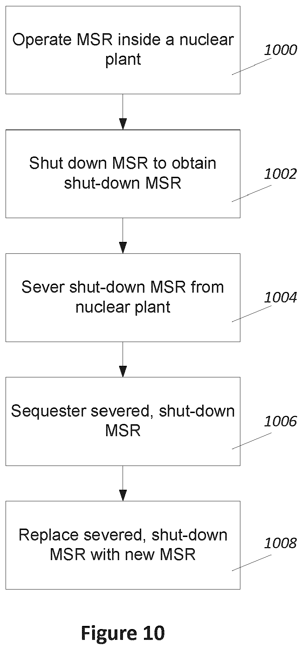

Figure 10 shows a flowchart of a method according to certain examples of the present disclosure. The method shown at Figure 10 is a method of operating a nuclear power plant. The nuclear power plant comprises an MSR that generates heat (thermal energy) and a heat exchanger system. The MSR comprises a vessel, a graphite moderator core positioned in the vessel, and a molten salt circulating at least in the vessel. The MSR heats the molten salt and the heat exchanger system receives the heat from the molten salt.

The method of Figure 10 includes, at action 1000, operating the MSR under pre-determined operation conditions. At action 1002, the MSR is shut down after a pre-determined duration of operation. The pre-determined duration of operation is determined in relation to maintaining the structural integrity of the graphite moderator core positioned in the vessel of the MSR and in relation to the operation conditions under which the MSR operates. For a given graphite moderator core, when the pre-determined operation conditions are such that the graphite moderator core is subjected to low peak power densities and low average power densities, the pre-determined duration of operation will be longer than when the pre-determined operation conditions are such that the graphite moderator core is subjected to high peak power densities and high average power densities. An MSR having a peak power density of 20 MWₜₕₑᵣₘₐₗ/m³ would result in the pre-determined duration of operation being about 11.5 years when running at full capacity, and about 15 years when running at 75% capacity. It is envisaged that the operational time (duration) of a practical IMSR will be less than 15 years and thus, will have a peak power density higher than 20MWₜₕₑᵣₘₐₗ/m³.

At action 1004, any operational connection between the shut-down MSR and any portion of the heat exchanger system located outside the vessel are severed. This results in a severed, shut-down MSR. At action 1004, any type of conduit connected to the MSR and used to transfer heat from the MSR to any part of the heat exchanger system located outside the vessel is severed.

At action 1006, the severed, shut-down MSR is sequestered in a sequestration area, which can be in the nuclear power plant itself of in any other suitable place such as, for example, abandoned mines, etc. At action 1008, a new MSR can be connected to any part of the portion of the heat exchanger system located outside the vessel of the new MSR.

Once the service life (design life) of the IMSR is reached, the reactor is shut down by, for example, using a control rod (shutdown rod) or by draining the molten fuel salt 108 to external storage. The coolant lines can then be sealed and/or crimped and disconnected along with any other lines such as off gas lines. After disconnecting these lines the spent IMSR, i.e., the IMSR vessel and all remaining conduit segments attached thereto, can be removed, for example, by using an overhead crane. Such operations might be done after a period of in situ cool down for radiation levels to diminish. In such a mode, likely the next unit (i.e., the replacement IMSR) can be installed adjacent the spent IMSR such that, long term, while one unit operates, the other is cooling down and then replaced before the operating unit is finished its cycle. Using an overhead crane for removal may involve some mechanism to breach the primary hot cell. The pump motor, if employed, is one component that can be recycled for example by cutting it from the shaft. The rest of the unit can be transferred off site or to another area of the nuclear power plant, perhaps even within the primary hot cell. As an option, the unit might also be used for the short, medium or even long term storage of the primary fuel salt itself, perhaps after some or all actinides are removed for recycle or alternate storage. Thus the unit may act as well as a storage and/or disposal canister for the internal graphite, primary heat exchangers and even the salt itself. At some point a decision on long term sequestration would have to be made but potentially the entire unit could be lowered into an underground location such as deep borehole made on site or transported to a salt cavern for safe long term sequestration.

Some comment on the overall economic viability is perhaps of use as it goes against the often imposed logic of attempting to get the longest service life as possible from all components. The advantages seem to greatly outweigh any economic penalty of decreased capital amortization time. First, there may be little change in the overall need of graphite over the lifetime of the nuclear plant itself as would be understood by those trained in the field. Second, the components now having a shorter design life such as the reactor vessel and/or primary heat exchangers typically make up only a small fraction of the nuclear plant costs. In studies by Oak Ridge National Laboratories, such as in ORNL 4145 the cost of the reactor vessel and primary heat exchangers were only around 10% of the plant cost. The ability to lower the cost of these items by the great simplifications allowed by having a sealed replaceable unit would seem to more than make up for the lowered amortization time. When the decreased research and development costs are factored in, the advantage of this disclosed design seem clear.

In the preceding description, for purposes of explanation, numerous details are set forth in order to provide a thorough understanding of the invention. However it will be apparent to one skilled in the art that these specific details are not required.

The above described set-ups are intended to be examples only. Alterations, modifications and variations can be effected to the particular embodiments by those skilled in the art without departing from the scope, to be defined solely in the accompanying claims.

## Claims

1. A method of operating a nuclear power plant, the nuclear power plant comprising a molten salt reactor (MSR) to produce heat, a heat exchanger system, and an end use system, the heat exchanger system to receive heat produced by the MSR and to provide the received heat to the end use system, the method comprising steps of:
operating (1000) the MSR, the MSR comprising a vessel, a graphite moderator core positioned in the vessel, and a molten salt circulating at least in the vessel, the heat exchanger system having an inside portion located inside the vessel and an outside portion located outside the vessel, the inside portion having a plurality of heat exchangers, each heat exchanger having an inlet conduit and an outlet conduit, each inlet conduit and each outlet conduit extending from each respective heat exchanger, through the vessel, toward the outside portion of the heat exchanger system and connecting each respective heat exchanger to the outside portion of the heat exchanger system, the vessel being sealed to permanently integrate the graphite core into the vessel;
shutting down (1002) the MSR after a pre-determined duration of operation, to obtain a shut-down MSR;
severing (1004) any operational connection between the inlet conduits and the outlet conduits of the shut-down MSR and the outside portion of the heat exchanger system, to obtain a severed, shut-down MSR;
sequestering (1006) the severed, shut-down MSR; and
operationally connecting a replacement MSR (1008) to the outside portion of the heat exchanger system located outside the vessel of the replacement MSR.

2. The method of claim 1 wherein, prior to shutting down the MSR, the MSR is operated to provide a peak core power density of at least 20MWₜₙₑᵣₘₐₗ/m³.

3. The method of claim 1 wherein sequestering the severed, shut-down MSR is preceded by a step of leaving the severed, shut-down MSR in place to allow the severed, shut-down MSR to cool by radioactive decay of radioactive elements present in the severed, shut-down MSR.

4. The method of claim 1 wherein the graphite moderator core has a damage operation duration beyond which the graphite moderator core becomes damaged, the pre-determined duration of operation being shorter than the core damage operation duration.

5. The method of claim 1 wherein:
the fuel salt is a molten fuel salt;
the nuclear power plant further comprises radioactivity detectors, and shut-off mechanisms,
the graphite moderator core defines one or more than one through hole, the heat exchanger system comprises: a heat exchanger unit positioned in the vessel, the heat exchanger unit having the plurality of heat exchangers arranged therein, each heat exchanger having a coolant salt circulating therein, the heat exchanger unit being in fluid communication with the one or more than one through hole of the graphite moderator core, and
the MSR further comprises:
a pump system to pump the molten fuel salt through the heat exchanger unit and through the one or more than one through hole of the graphite moderator core, the heat exchangers being arranged in the heat exchanger unit to have the molten fuel flow thereon,
each heat exchanger having associated thereto a respective radioactivity detector, each radioactivity detector arranged to detect radioactivity present in the coolant salt circulating in the respective heat exchanger, and
each heat exchanger having associated thereto a respective shutoff mechanism arranged to shut off circulation of the coolant salt circulating in the respective heat exchanger,
the method further comprising, prior to shutting down the MSR, activating the shutoff mechanism of a particular heat exchanger when radioactivity beyond a threshold amount is detected, by the radioactivity detector of the particular heat exchanger, in the particular heat exchanger.

6. The method of claim 5 wherein
the nuclear power plant further comprises a pressure monitoring system, each heat exchanger being operationally connected to the pressure monitoring system, the pressure monitoring system to monitor the pressure of the coolant salt circulating in the respective heat exchanger,
the method further comprising, prior to shutting down the MSR, activating the shutoff mechanism of the particular heat exchanger when the pressure monitoring system detects a pressure change in the particular heat exchanger.

7. The method of claim 1 wherein:
the fuel salt is a molten fuel salt;
the nuclear power plant further comprises radioactivity detectors, and shut-off mechanisms,
the graphite moderator core defines one or more than one through hole, and
the heat exchanger system further comprises:
heat exchangers disposed in the vessel, about a longitudinal axis of the vessel, each heat exchanger having a coolant salt circulating therein, each heat exchanger being operationally connected to the electric generator, the heat exchangers being in fluid communication with the one or more than one through hole of the graphite moderator core, the heat exchangers defining an opening above the graphite moderator core,
the MSR further comprises:
a pump system to pump the molten fuel salt through the heat exchanger unit and through the one or more than one through hole of the graphite moderator core, the heat exchangers being arranged in the heat exchanger unit to have the molten fuel flow thereon;
a baffle structure positioned in the vessel, between the heat exchangers and the graphite moderator core, the baffle structure to guide molten salt fluid flowing downwards in the vessel and out of the heat exchangers, along an outside periphery of the graphite moderator core;
each heat exchanger having associated thereto a respective radioactivity detector, each radioactivity detector arranged to detect radioactivity present in the coolant salt circulating in the respective heat exchanger,
each heat exchanger having associated thereto a respective shutoff mechanism arranged to shut off circulation of the coolant salt circulating in the respective heat exchanger when radioactivity beyond a threshold amount is detected, by the respective radioactivity detector, in the respective heat exchanger,
the method further comprising activating the shutoff mechanism of a particular heat exchanger when radioactivity beyond a threshold amount is detected, by the radioactivity detector of the particular heat exchanger, in the particular heat exchanger.

8. The method of claim 1 wherein:
the fuel salt is a molten fuel salt;
the nuclear power plant further comprises radioactivity detectors, and shut-off mechanisms,
the graphite moderator core defines one or more than one through hole, and
the heat exchanger system further comprises:
heat exchangers disposed in the vessel, above the graphite moderator core and about a longitudinal axis of the vessel, each heat exchanger having a coolant salt circulating therein, each heat exchanger being operationally connected to the electric generator, the heat exchangers being in fluid communication with the one or more than one through hole of the graphite moderator core, the heat exchangers defining an opening above the graphite moderator core,
the MSR further comprises:
a baffle structure positioned in the vessel, between the heat exchangers and the graphite moderator core, the baffle structure to guide molten salt fluid flowing downwards in the vessel and out of the heat exchangers, along an outside periphery of the graphite moderator core;
each heat exchanger having associated thereto a respective radioactivity detector, each radioactivity detector arranged to detect radioactivity present in the coolant salt circulating in the respective heat exchanger,
each heat exchanger having associated thereto a respective shutoff mechanism arranged to shut off circulation of the coolant salt circulating in the respective heat exchanger when radioactivity beyond a threshold amount is detected, by the respective radioactivity detector, in the respective heat exchanger,
the molten fuel salt circulating in the heat exchangers and the graphite moderator core through natural circulation caused by heating of the molten fuel salt being heated as it traverses the graphite moderator and by cooling as the molten fuel salt traverses the heat exchangers,
the method further comprising activating the shutoff mechanism of a particular heat exchanger when radioactivity beyond a threshold amount is detected, by the radioactivity detector of the particular heat exchanger, in the particular heat exchanger.

9. The method of any one of claims 1-9 wherein the MSR further comprises a neutron reflector positioned in the vessel, between the graphite moderator core and the heat exchanger unit.

## Patentansprüche

1. Verfahren zum Betrieb eines Kernkraftwerks, wobei das Kernkraftwerk einen Flüssigsalzreaktor (molten salt reactor, MSR) zum Wärmeproduzieren, ein Wärmetauschsystem und ein Endverwendungssystem umfasst, wobei das Wärmetauschsystem die von dem MSR produzierte Wärme empfängt und das Endverwendungssystem mit der empfangenen Wärme versorgt, wobei das Verfahren die folgenden Schritte umfasst:
Betrieb (1000) des MSR, wobei der MSR einen Behälter, einen in dem Behälter positionierten Graphitmoderatorkern und eine zumindest in dem Behälter zirkulierende Salzschmelze umfasst, wobei das Wärmetauschsystem einen inneren Abschnitt innerhalb des Behälters und einen äußeren Abschnitt außerhalb des Behälters aufweist, wobei der innere Abschnitt eine Mehrzahl von Wärmetauschern aufweist, wobei jeder Wärmetauscher eine Zufuhrleitung und einer Abführleitung aufweist, wobei jede Zufuhrleitung und jede Abführleitung sich von dem jeweiligen Wärmetauscher durch den Behälter in Richtung des äußeren Abschnitts des Wärmetauschsystems erstreckt und jeden jeweiligen Wärmetauscher mit dem äußeren Abschnitt des Wärmetauschsystems verbindet, wobei der Behälter abgedichtet ist, um den Graphitkern dauerhaft in den Behälter zu integrieren;
Abschalten (1002) des MSR nach einer vorbestimmten Betriebsdauer, um einen abgeschalteten MSR zu erhalten,
Trennen (1004) aller Betriebsverbindungen zwischen den Zufuhrleitungen und der Abführleitungen des abgeschalteten MSR und dem äußeren Abschnitt des Wärmetauschsystems, um einen getrennten, abgeschalteten MSR zu erhalten;
Absondern (1006) des getrennten, abgeschalteten MSR; und
betriebliches Verbinden eines Ersatz-MSR (1008) mit dem äußeren Abschnitt des Wärmetauschsystems, der außerhalb des Behälters des Ersatz-MSR angeordnet ist.

2. Das Verfahren nach Anspruch 1, wobei vor dem Abschalten des MSR, der MSR zum Liefern einer Spitzenkernleistungsdichte von mindestens 20 MWₜₕₑᵣₘₐₗ/m³ betrieben wird.

3. Das Verfahren nach Anspruch 1, wobei dem Absondern des getrennten, abgeschalteten MSR ein Schritt vorangeht, bei dem der getrennte, abgeschaltete MSR an seiner Position belassen wird, um das Abkühlen des getrennten, abgeschalteten MSR durch radioaktiven Zerfall von in dem getrennten, abgeschalteten MSR vorhandenen radioaktiven Elementen zu erlauben.

4. Das Verfahren nach Anspruch 1, wobei der Graphitmoderatorkern eine Schadensbetriebsdauer aufweist, jenseits der der Graphitmoderatorkern beschädigt wird, wobei die vorbestimmte Betriebsdauer kürzer als die Schadensbetriebsdauer ist.

5. Das Verfahren nach Anspruch 1, wobei:
der Salzbrennstoff ein Salzschmelzenbrennstoff ist;
das Kernkraftwerk weiterhin Radioaktivitätsdetektoren und Abschaltmechanismen umfasst,
der Graphitmoderatorkern ein oder mehr als ein Durchgangsloch definiert,
das Wärmetauschsystem umfasst: eine Wärmetauscheinheit, die in dem Behälter angeordnet ist, wobei die Mehrzahl von Wärmetauschern in der Wärmetauscheinheit angeordnet ist, wobei in jedem Wärmetauscher ein Kühlsalz zirkuliert, wobei die Wärmetauscheinheit mit dem einen oder mehr als einen Durchgangsloch des Graphitmoderatorkerns in Fluidverbindung steht, und
der MSR weiterhin aufweist:
ein Pumpensystem, um den flüssigen Salzbrennstoff durch die Wärmetauscheinheit und durch das eine oder mehr als eine Durchgangsloch des Graphitmoderatorkerns zu pumpen, wobei die Wärmetauscher in der Wärmetauscheinheit angeordnet sind, um den flüssigen Salzfluss darauf zu haben,
wobei jedem Wärmetauscher ein jeweiliger Radioaktivitätsdetektor zugeordnet ist, der zum Erfassen der Radioaktivität, die in dem im jeweiligen Wärmetauscher zirkulierenden Kühlsalz vorhanden ist, angeordnet ist, und
wobei jedem Wärmetauscher ein jeweiliger Absperrmechanismus zugeordnet ist, der zum Absperren der Zirkulation des Kühlsalzes, das in dem jeweiligen Wärmetauscher zirkuliert, angeordnet ist, und
wobei das Verfahren weiterhin vor dem Abschalten des MSR die Aktivierung des Absperrmechanismus von einem bestimmten Wärmetauscher umfasst, wenn durch den Radioaktivitätsdetektor des bestimmten Wärmetauschers Radioaktivität jenseits eines Schwellenwerts in dem bestimmten Wärmetauscher detektiert wird.

6. Das Verfahren nach Anspruch 5, wobei
das Kernkraftwerk weiterhin ein Drucküberwachungssystem umfasst, wobei jeder Wärmetauscher betrieblich mit dem Drucküberwachungssystem verbunden ist, wobei das Drucküberwachungssystem zur Überwachung des Drucks des Kühlsalzes, das in dem jeweiligen Wärmetauscher zirkuliert, vorgesehen ist,
das Verfahren weiterhin, vor dem Abschalten des MSR, die Aktivierung des Absperrmechanismus des jeweiligen Wärmetauschers umfasst, wenn das Drucküberwachungssystem eine Druckänderung in dem jeweiligen Wärmetauscher erfasst.

7. Verfahren nach Anspruch 1, wobei:
der Salzbrennstoff ein Salzschmelzenbrennstoff ist;
das Kernkraftwerk weiterhin Radioaktivitätsdetektoren und Absperrmechanismen umfasst,
der Graphitmoderatorkern ein oder mehr als ein Durchgangsloch definiert und
das Wärmetauschsystem weiter umfasst:
Wärmetauscher, die in dem Behälter um eine Längsachse des Behälters angeordnet sind, wobei in jedem Wärmetauscher ein Kühlsalz zirkuliert, wobei jeder Wärmetauscher betrieblich mit dem elektrischen Generator verbunden ist, wobei die Wärmetauscher in Fluidverbindung mit dem einen oder mehr als einen Durchgangsloch des Graphitmoderatorkerns verbunden sind, wobei die Wärmetauscher eine Öffnung über dem Graphitmoderatorkern definieren,
das MSR weiterhin umfasst:
ein Pumpensystem, um den flüssigen Salzbrennstoff durch die Wärmetauscheinheit und durch das eine oder mehr als eine Durchgangsloch des Graphitmoderatorkerns zu pumpen, wobei die Wärmetauscher in der Wärmetauscheinheit angeordnet sind, um den flüssigen Salzfluss darauf fließen zu lassen,
eine Leitblechstruktur, die zwischen den Wärmetauschern und dem Graphitmoderatorkern im Behälter angeordnet ist, und die zum Leiten des flüssigen Salzflusses abwärts in dem Behälter und aus den Wärmetauscheren heraus, entlang einer äußeren Peripherie des Graphitmoderatorkerns vorgesehen ist,
wobei jedem Wärmetauscher ein jeweiliger Radioaktivitätsdetektor zugeordnet ist, der zum Erfassen der Radioaktivität, die in dem im jeweiligen Wärmetauscher zirkulierenden Kühlsalz vorhanden ist, angeordnet ist, und
wobei jedem Wärmetauscher ein jeweiliger Absperrmechanismus zugeordnet ist, der zum Absperren der Zirkulation des Kühlsalzes, das in dem jeweiligen Wärmetauscher zirkuliert, angeordnet ist, wenn durch den jeweiligen Radioaktivitätsdetektor in dem jeweiligen Wärmetauscher Radioaktivität jenseits eines Schwellenwerts detektiert wird, und
wobei das Verfahren weiterhin die Aktivierung des Absperrmechanismus von einem bestimmten Wärmetauscher umfasst, wenn durch den Radioaktivitätsdetektor des bestimmten Wärmetauschers Radioaktivität jenseits eines Schwellenwerts in dem bestimmten Wärmetauscher detektiert wird.

8. Verfahren nach Anspruch 1, wobei:
der Salzbrennstoff ein Salzschmelzenbrennstoff ist;
das Kernkraftwerk weiterhin Radioaktivitätsdetektoren und Absperrmechanismen umfasst,
der Graphitmoderatorkern ein oder mehr als ein Durchgangsloch definiert und
das Wärmetauschsystem weiter umfasst:
Wärmetauscher, die in dem Behälter über dem Graphitmoderatorkern und um eine Längsachse des Behälters angeordnet sind, wobei in jedem Wärmetauscher ein Kühlsalz zirkuliert, wobei jeder Wärmetauscher betrieblich mit dem elektrischen Generator verbunden ist, wobei die Wärmetauscher in Fluidverbindung mit dem einen oder mehr als einen Durchgangsloch des Graphitmoderatorkerns verbunden sind, wobei die Wärmetauscher eine Öffnung über dem Graphitmoderatorkern definieren,
das MSR weiterhin umfasst:
eine Leitblechstruktur, die zwischen den Wärmetauschern und dem Graphitmoderatorkern angeordnet ist, und die zum Leiten des flüssigen Salzflusses abwärts in dem Behälter und aus den Wärmetauschern heraus, entlang einer äußeren Peripherie des Graphitmoderatorkerns vorgesehen ist,
wobei jedem Wärmetauscher ein jeweiliger Radioaktivitätsdetektor zugeordnet ist, der zum Erfassen der Radioaktivität, die in dem im jeweiligen Wärmetauscher zirkulierenden Kühlsalz vorhanden ist, angeordnet ist, und
wobei jedem Wärmetauscher ein jeweiliger Absperrmechanismus zugeordnet ist, der zum Absperren der Zirkulation des Kühlsalzes, das in dem jeweiligen Wärmetauscher zirkuliert, angeordnet ist, wenn durch den jeweiligen Radioaktivitätsdetektor in dem jeweiligen Wärmetauscher Radioaktivität jenseits eines Schwellenwerts detektiert wird,
wobei der Salzschmelzenbrennstoff in den Wärmetauschern und dem Graphitmoderatorkern durch natürliche Zirkulation zirkuliert, verursacht durch Erhitzen des Salzschmelzenbrennstoffs, der erhitzt wird, wenn er den Graphitmoderator passiert, und durch Kühlen, wenn der Salzschmelzenbrennstoff die Wärmetauscher passiert,
wobei das Verfahren weiterhin die Aktivierung des Absperrmechanismus von einem bestimmten Wärmetauscher umfasst, wenn durch den Radioaktivitätsdetektor des bestimmten Wärmetauschers Radioaktivität jenseits eines Schwellenwerts in dem bestimmten Wärmetauscher detektiert wird.

9. Das Verfahren nach einem der Ansprüche 1 bis 9, wobei der MSR weiter einen Neutronenreflektor umfasst, der in dem Behälter zwischen dem Graphitmoderatorkern und der Wärmetauscheinheit angeordnet ist.

## Revendications

1. Méthode de fonctionnement d'une centrale nucléaire, la centrale nucléaire ayant un réacteur à sel fondu (molten salt reactor MSR) pour produire de la chaleur, un système échangeur de chaleur et un système d'utilisation finale, lequel système échangeur de reçoit la chaleur produite par le MSR et fournit la chaleur reçue au système d'utilisation finale, la méthode comprenant les étapes suivantes :
exploitation (1000) du MSR, le MSR comprenant un récipient, un coeur modérateur en graphite positionné dans le récipient et un sel fondu circulant au moins dans le récipient, le système échangeur de chaleur ayant une portion interne située dans le récipient et une portion externe située à l'extérieur du récipient, la portion interne ayant une pluralité d'échangeurs de chaleur, chaque échangeur de chaleur ayant un conduit entrant et un conduit sortant, chaque conduit entrant et chaque conduit sortant s'étendant de chaque échangeur de chaleur respectif à travers le récipient vers la portion externe du système échangeur de chaleur et connectant chaque échangeur de chaleur respectif à la portion externe du système échangeur de chaleur, le récipient étant scellé pour intégrer le coeur en graphite de façon définitive dans le récipient ;
arrêt (1002) du MSR après une durée de fonctionnement prédéterminée pour obtenir un MSR arrêté ;
coupe (1004) de toute connexion opérationnelle entre les conduits entrant et les conduits sortant du MSR arrêté et la portion externe du système échangeur de chaleur pour obtenir un MSR coupé et arrêté ;
séquestration (1006) du MSR coupé et arrêté ; et
connexion opérationnelle d'un MSR de remplacement (1008) avec la portion externe du système échangeur de chaleur situé à l'extérieur du récipient du MSR de remplacement.

2. Méthode selon la revendication 1, où, avant l'arrêt du MSR, le MSR est actionné pour fournir un pique d'intensité de densité de puissance du coeur d'au moins 20 MW_{thermique}/m³.

3. Méthode selon la revendication 1, où la séquestration du MSR coupé et arrêté est précédée d'une étape dans laquelle le MSR coupé et arrêté est laissé en place pour permettre au MSR coupé et arrêté de refroidir par décroissance radioactive d'éléments radioactifs présents dans le MSR coupé et arrêté.

4. Méthode selon la revendication 1, où le coeur modérateur en graphite a une durée de fonctionnement d'endommagement, au-delà de laquelle le coeur modérateur en graphite devient endommagé, la durée prédéterminée de fonctionnement étant plus courte que la durée de fonctionnement d'endommagement du coeur.

5. Méthode selon la revendication 1, où :
le sel carburant est un sel carburant fondu ;
la centrale nucléaire comprend également des détecteurs de radioactivité et des mécanismes de fermeture,
le coeur modérateur en graphite définit un ou plus d'un trou débouchant,
le système échangeur de chaleur comprend : une unité échangeuse de chaleur positionnée dans le récipient, une pluralité d'échangeurs de chaleur étant arrangés dans l'unité échangeuse de chaleur, un sel caloporteur circulant dans chaque échangeur de chaleur, l'unité échangeuse de chaleur étant en communication fluidique avec un ou plus d'un trou débouchant du coeur modérateur de chaleur et
le MSR comprend également :
un système de pompes pour pomper le sel carburant fondu à travers l'unité échangeuse de chaleur et à travers le ou les trous débouchants du coeur modérateur en graphite, les échangeurs de chaleur étant arrangé dans l'unité échangeuse de chaleur pour que le carburant fondu coule sur les échangeurs de chaleur,
à chaque échangeur de chaleur étant associé un détecteur de radioactivité respectif, chaque détecteur de radioactivité étant arrangé pour détecter la radioactivité présente dans le sel caloporteur circulant dans l'échangeur de chaleur respectif et
à chaque échangeur de chaleur étant associé un mécanisme de fermeture respectif arrangé pour couper la circulation du sel caloporteur circulant dans l'échangeur de chaleur respectif,
la méthode comprenant également, avant l'arrêt du MSR, l'activation du mécanisme de fermeture d'un échangeur de chaleur particulier quand une radioactivité supérieure à une quantité seuil est détectée par le détecteur de radioactivité de l'échangeur de chaleur particulier, dans l'échangeur de radioactivité particulier.

6. Méthode selon la revendication 5, où
la centrale nucléaire comprend également un système de surveillance de pression, chaque échangeur de chaleur étant connecté opérationnellement au système de surveillance de pression, lequel système de surveillance de pression surveille la pression du sel caloporteur circulant dans l'échangeur de chaleur respectif,
la méthode comprenant également, avant l'arrêt du MSR, l'activation du mécanisme de fermeture de l'échangeur de chaleur particulier quand le système de surveillance de pression détecte un changement de pression dans l'échangeur de chaleur particulier.

7. Méthode selon la revendication 1, où :
le sel carburant est un sel carburant fondu ;
la centrale nucléaire comprend également des détecteurs de radioactivité et des mécanismes de fermeture,
le coeur modérateur en graphite définit un ou plus d'un trou débouchant,
le système échangeur de chaleur comprend également :
des échangeurs de chaleur disposés dans le récipient, autour d'un axe longitudinal du récipient, un sel caloporteur circulant dans chaque échangeur de chaleur, chaque échangeur de chaleur étant connecté opérationnellement au générateur électrique, les échangeurs de chaleur étant en communication fluidique avec le ou les trous débouchants du coeur modérateur en graphite, les échangeurs de chaleur définissant une ouverture au-dessus du coeur modérateur en graphite,
le MSR comprend également :
un système de pompes pour pomper le sel carburant fondu à travers l'unité échangeuse de chaleur et à travers le ou les trous débouchants du coeur modérateur en graphite, les échangeurs de chaleur étant arrangé dans l'unité échangeuse de chaleur pour que le carburant fondu coule sur les échangeurs de chaleur,
une structure de déflecteurs positionnée dans le récipient entre les échangeurs de chaleur et le coeur modérateur en graphite, laquelle structure de déflecteurs guide le fluide de sel fondu dans le récipient et en-dehors des échangeurs de chaleur le long d'une périphérie du coeur modérateur en graphite ;
à chaque échangeur de chaleur étant associé un détecteur de radioactivité respectif, chaque détecteur de radioactivité étant arrangé pour détecter la radioactivité présente dans le sel caloporteur circulant dans l'échangeur de chaleur respectif,
à chaque échangeur de chaleur étant associé un mécanisme de fermeture respectif arrangé pour couper la circulation du sel caloporteur circulant dans l'échangeur de chaleur respectif quand une radioactivité au-dessus d'une quantité seuil est détectée par le détecteur de radioactivité respectif dans l'échangeur de radioactivité respectif,
la méthode comprenant également l'activation du mécanisme de fermeture d'un échangeur de chaleur particulier quand une radioactivité au-dessus d'une quantité seuil est détectée par le détecteur de radioactivité respectif dans l'échangeur de radioactivité respectif.

8. Méthode selon la revendication 1, où :
le sel carburant est un sel carburant fondu ;
la centrale nucléaire comprend également des détecteurs de radioactivité et des mécanismes de fermeture,
le coeur modérateur en graphite définit un ou plus d'un trou débouchant,
le système échangeur de chaleur comprend également :
des échangeurs de chaleur disposé dans le récipient, au-dessus du coeur modérateur en graphite et autour d'un axis longitudinal du récipient, un sel caloporteur circulant dans chaque échangeur de chaleur, chaque échangeur de chaleur étant connecté opérationnellement au générateur électrique, les échangeurs de chaleur étant en communication fluidique avec le ou les trous débouchants du coeur modérateur en graphite, les échangeurs de chaleur définissant une ouverture au-dessus du coeur modérateur en graphite,
le MSR comprend également :
une structure de déflecteurs positionnée dans le récipient entre les échangeurs de chaleur et le coeur modérateur en graphite, laquelle structure de déflecteurs guide le fluide de sel fondu dans le récipient et en-dehors des échangeurs de chaleur le long d'une périphérie du coeur modérateur en graphite ;
à chaque échangeur de chaleur étant associé un détecteur de radioactivité respectif, chaque détecteur de radioactivité étant arrangé pour détecter la radioactivité présente dans le sel caloporteur circulant dans l'échangeur de chaleur respectif,
à chaque échangeur de chaleur étant associé un mécanisme de fermeture respectif arrangé pour couper la circulation du sel caloporteur circulant dans l'échangeur de chaleur respectif quand une radioactivité au-dessus d'une quantité seuil est détectée par le détecteur de radioactivité respectif dans l'échangeur de radioactivité respectif,
le sel carburant fondu circulant dans les échangeurs de chaleur et le coeur modérateur en graphite grâce à une circulation naturelle causée par échauffement du sel carburant fondu qui est chauffé en traversant le modérateur en graphite et par refroidissement lorsque le sel carburant fondu traverse les échangeurs de chaleur,
la méthode comprenant également l'activation du mécanisme de fermeture d'un échangeur de chaleur particulier lorsqu'une radioactivité au-dessus d'une quantité seuil est détectée par le détecteur de radioactivité de l'échangeur de chaleur particulier dans l'échangeur de chaleur particulier.

9. Méthode selon l'une quelconque revendication 1 à 9, où le MSR comprend également un réflecteur de neutrons positionné dans le récipient, entre le coeur modérateur en graphite et l'unité échangeuse de chaleur.
